# EUROPÄISCHE PATENTSCHRIFT

(11) **EP 1 177 488 B1**
(45) Veröffentlichungstag und Bekanntmachung des Hinweises auf die Patenterteilung: **19.03.2003**
(21) Anmeldenummer: 00940153.0
(22) Anmeldetag: 27.04.2000
(51) Int. Cl.: G05D 3/00

(54) **VERFAHREN UND EINRICHTUNG ZUR ENDLAGENABSCHALTUNG EINES ANTRIEBS EINER STELLARMATUR**
METHOD AND DEVICE FOR END POSITION DISCONNECTION OF A DRIVE MECHANISM OF A REGULATING VALVE
PROCEDE ET DISPOSITIF D'ARRET EN POSITION TERMINALE D'UN ENTRAINEMENT D'UNE VANNE DE REGLAGE

(30) Priorität: 07.05.1999 DE 19920947
(43) Veröffentlichungstag der Anmeldung: 06.02.2002
(73) Patentinhaber: Framatome ANP GmbH, 91050 Erlangen (DE)
(72) Erfinder: STEIGLEDER, Norbert, D-55131 Mainz (DE); HEIN, Karlheinz, D-63755 Alzenau (DE); STECHER, Willi, D-91207 Lauf-Heuchling (DE)
(74) Vertreter: Tergau & Pohl Patentanwälte
(86) Internationale Anmeldenummer: DE0001317
(87) Internationale Veröffentlichungsnummer: WO00068752

(56) Entgegenhaltungen:
- EP-A- 0 859 116
- DE-A- 2 727 293
- DE-A- 3 813 663
- DE-A- 4 440 449

## Beschreibung

Die Erfindung betrifft ein Verfahren zur Endlagenabschaltung eines Antriebs einer Stellarmatur, wobei der Antrieb abgeschaltet wird, wenn eine durch ihn veränderliche Größe einen Grenzwert erreicht hat. Die Erfindung betrifft auch eine Einrichtung zur Endlagenabschaltung eines Antriebs einer Stellarmatur, insbesondere zur Durchführung des Verfahrens, wobei ein Wegendschalter am Antrieb oder an der Stellarmatur oder an einem diesen zugeordneten Bauteil angeordnet ist.

In einem Kühlkreislauf eines Kraftwerkes, insbesondere eines Kernkraftwerkes, sind zahlreiche Stellarmaturen vorhanden. Diese Stellarmaturen sind häufig mit einem elektrischen Antrieb versehen. Sie können aber auch mit einem hydraulischen Antrieb ausgestattet sein.

Wenn eine solche Stellarmatur geschlossen wird, kommt es darauf an, dass die Schließkraft möglichst wenig von ihrem Sollwert abweicht. Dadurch ist eine optimale Funktionsfähigkeit der Armatur gewährleistet.

Es ist deshalb bekannt, eine Endlagenabschaltung vorzunehmen. Dabei wird der Antrieb der Stellarmatur zu dem Zeitpunkt abgeschaltet, an dem die Armatur möglichst gut schließt. Einerseits soll die Armatur vollständig geschlossen sein, andererseits soll der Antrieb den Ventilteller der Stellarmatur nicht zu fest auf seinen Sitz anpressen, um Schäden zu vermeiden.

Bisher sind zwei Varianten einer Endlagenabschaltung bekannt. Bei der ersten Variante wird als durch den Antrieb veränderliche Größe das Drehmoment an den drehbaren Bestandteilen des Antriebs und/oder der Stellarmatur herangezogen. In der Regel wird mittels eines Drehmomentabschalters das Drehmoment an einer federgelagerten Schneckenwelle berücksichtigt, die Bestandteil eines Getriebes ist, das den Antrieb mit der Stellarmatur verbindet. Das Abschalt-Drehmoment entspricht der für eine sichere Schließfunktion notwendigen Spindelkraft einschließlich Sicherheitszuschlägen, wobei bei dieser Spindelkraft ein bestimmter üblicher Reibbeiwert zwischen Spindelmutter und Spindel zugrunde gelegt wird.

Falls die Reibung zwischen den beweglichen Teilen, z.B. zwischen der Spindelmutter und der Spindel, niedriger als erwartet ist, kann es bei einer drehmomentabhängigen Abschaltung dazu kommen, dass eine zu hohe Kraft auf die Stellarmatur einwirkt. Dadurch kann es zu Folgeschäden kommen.

Bei der zweiten Variante einer Endlagenabschaltung wird mittels eines Wegendschalters, der häufig in der Schalt- und Meldeeinheit des Antriebs angeordnet ist, die Bewegung der Spindel oder in der Regel der Antriebswelle des Antriebs berücksichtigt. Eine Stellarmatur mit einer positionsgesteuerten Endlagenabschaltung ist beispielsweise aus der DE 27 27 293 A1 bekannt.

Infolge einer nicht exakten Justierung eines Wegendschalters kann es dabei dazu kommen, dass der Antrieb abgeschaltet wird bevor die Stellarmatur vollständig geschlossen ist.

Der Erfindung liegt die Aufgabe zugrunde, ein Verfahren und eine Einrichtung anzugeben, die eine sichere Endlagenabschaltung eines Antriebs einer Stellarmatur gewährleisten. Dabei soll in gleicher Weise sichergestellt werden, dass einerseits die Stellarmatur stets vollständig schließt, und dass andererseits selbst bei einer geringen Reibung zwischen einzelnen beweglichen Teilen keine Folgeschäden durch zu starkes Anpressen des Ventiltellers auf seinen Sitz entstehen können.

Die zuerst genannte Aufgabe wird dadurch gelöst, dass die veränderliche Größe die vom Antrieb auf die Stellarmatur einwirkende Kraft ist.

Damit wird der Vorteil erzielt, dass die Stellarmatur stets zuverlässig schließt und nicht durch einen zu langen Betrieb des Antriebs beschädigt werden kann.

Der Grenzwert der Kraft wird beispielsweise im Bereich steigender Kraft so gewählt, dass der Antrieb abgeschaltet wird, bevor das maximal zulässige Drehmoment des Antriebs erreicht wird. Dadurch, dass der Grenzwert im Bereich steigender Kraft angeordnet wird, ist sichergestellt, dass die Stellarmatur stets zuverlässig schließt. Solange die Kraft nicht ansteigt, könnte die Stellarmatur noch einen Spalt breit geöffnet sein.

Um für einen bestimmten Typ einer Stellarmatur einmal den Zeitpunkt festzustellen, an dem der Kraftanstieg beginnt, kann bei einem Versuch während eines Schließvorgangs die Kraft beispielsweise mit einer Kraftmessdose und/oder mit einem Dehnungsmessstreifen gemessen werden. Diese können an der Spindel der Stellarmatur, aber auch an anderen beweglichen Bauteilen des Antriebs oder der Stellarmatur bzw. eines Getriebes, das beide verbindet, angeordnet sein. Ein geeigneter Platz ist eine federgelagerte Schneckenwelle des Getriebes. Der Zeitpunkt kann auch analytisch bestimmt werden.

Beispielsweise wird der Antrieb durch einen Wegendschalter abgeschaltet, der so eingestellt ist, dass er bei steigender Kraft abschaltet. Hierbei kommt es darauf an, dass die Einstellung des Wegendschalters durch Vesuchsmessungen optimiert ist.

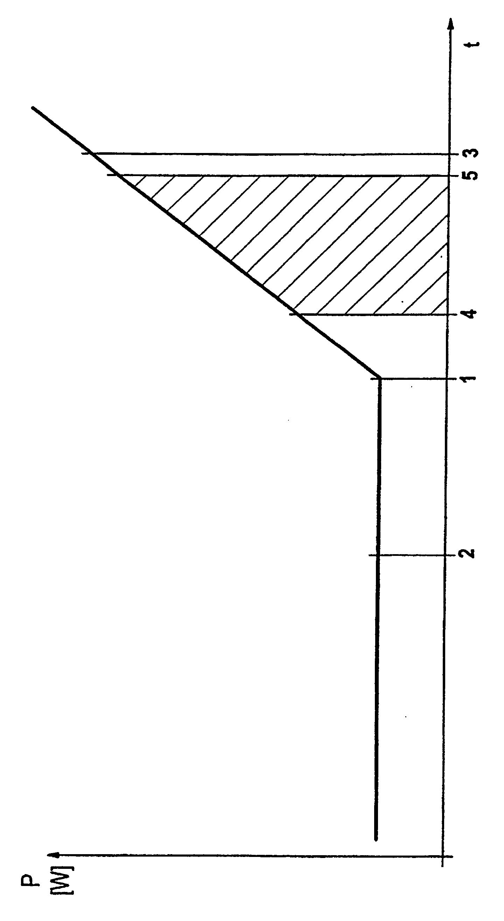

Beispielsweise wird der Antrieb im Zeitraum zwischen den beiden Zeitpunkten, die in der Zeichnung den schraffierten Bereich begrenzen, abgeschaltet.

Die Aufgabe, eine geeignete Einrichtung anzugeben, wird gemäß der Erfindung dadurch gelöst, dass der Wegendschalter so eingestellt ist, dass eine Abschaltung des Antriebs in Abhängigkeit der vom Antrieb auf die Stellarmatur einwirkenden Kraft erfolgt. Der Antrieb wird z.B. ausgeschaltet, wenn die Kraft auf ein Teil des Antriebs, der Stellarmatur oder eines zugeordneten Bauteils einen Sollwert übersteigt.

Mit dem Verfahren und mit der Einrichtung nach der Erfindung wird insbesondere der Vorteil erzielt, dass beim Schließvorgang einer Stellarmatur deren Antrieb weder zu früh noch zu spät abschaltet. Weder kann die Stellarmatur unvollständig schließen noch kann es durch einen zu hohen Andruck des Armaturentellers auf seinen Sitz zu Folgeschäden kommen.

Die Funktionsweise der Einrichtung nach der Erfindung, sowie die Durchführung des Verfahrens nach der Erfindung werden anhand der Zeichnung näher erläutert:

Die Zeichnung zeigt den typischen Wirkleistungsverlauf bei einem Abschaltvorgang einer Stellarmatur, die mit einem elektrischen Antrieb ausgestattet ist. Die Wirkleistung ist dabei mit der in der Stellarmatur wirkenden Kraft korreliert. Es kann also statt der Kraft stets auch die Wirkleistung betrachtet werden. Auf der Ordinate ist die Wirkleistung P aufgetragen, während auf der Abszisse die Zeit t, die seit Beginn des Schließvorganges vergangen ist, aufgetragen ist. Von einem ersten Zeitpunkt 1 an steigt, sofern der Antrieb weiterläuft, die Wirkleistung und damit auch die Kraft an.

Bisher wurde der Antrieb entweder in Abhängigkeit vom Weg oder in Abhängigkeit vom Drehmoment abgeschaltet.

Die wegabhängige Abschaltung mittels eines Wegendschalters geschieht immer während eines Zeitraumes, in dem die Wirkleistung noch konstant ist, z.B. zum Zeitpunkt 2. Dabei ist jedoch nicht auszuschließen, dass nach dem Abschalten des Antriebs die Stellarmatur noch nicht vollständig geschlossen ist.

Eine vom Drehmoment abhängige Abschaltung wird erst bei einer hohen Wirkleistung, bzw. einer hohen Kraft wirksam. Erst wenn die Armatur schließt, geht nämlich das Drehmoment deutlich zurück. Zu diesem Zeitpunkt, beispielsweise zum Zeitpunkt 3, kann aber der Armaturenteller bereits so fest an seinen Sitz angepresst sein, dass Folgeschäden nicht auszuschließen sind.

Bei dem Verfahren und der Einrichtung nach der Erfindung wird mit einem Wegendschalter gearbeitet, der jedoch bewusst so eingesetzt wird, dass die Kraft auf den Armaturenteller und damit die Wirkleistung bereits etwas angestiegen sind, wenn er schaltet. Ein geeigneter Zeitpunkt ist der Zeitpunkt 4. Es kann aber auch ein beliebiger Zeitpunkt zwischen den Zeitpunkten 4 und 5 gewählt werden. Ein geeigneter Zeitpunkt kann durch eine Versuchsreihe an einer Stellarmatur bestimmt werden. Zum Beispiel kann die Spindel der Armatur manuell bewegt werden, bis ein Widerstand fühlbar ist. Man hat dann die Stellung, die dem Zeitpunkt 1 entspricht, erreicht. Für den Wegendschalter wird dann ein Ort gewählt, der gewonnen wird, indem man die Spindel noch ein Stück weiter dreht. Dieser Ort entspricht einem Zeitpunkt zwischen den Zeitpunkten 4 und 5.

Damit ist sichergestellt, dass die Stellarmatur stets zuverlässig schließt und es andererseits zu keinen Beschädigungen kommen kann.

## Patentansprüche

1. Verfahren zur Endlagenabschaltung eines Antriebs einer Stellarmatur, wobei der Antrieb abgeschaltet wird, wenn eine durch ihn veränderliche Größe einen Grenzwert erreicht hat,
**dadurch gekennzeichnet, dass** die veränderliche Größe die vom Antrieb auf die Stellarmatur einwirkende Kraft ist.

2. Verfahren nach Anspruch 1,
**dadurch gekennzeichnet, dass** der Grenzwert der Kraft im Bereich steigender Kraft so gewählt wird, dass der Antrieb abgeschaltet wird, bevor das maximal zulässige Drehmoment des Antriebs erreicht wird.

3. Verfahren nach Anspruch 2,
**dadurch gekennzeichnet, dass** der Antrieb durch einen Wegendschalter abgeschaltet wird, der so eingestellt ist, dass er bei steigender Kraft abschaltet.

4. Einrichtung zur Endlagenabschaltung eines Antriebs einer Stellarmatur, insbesondere zur Durchführung des Verfahrens nach einem der Ansprüche 1 bis 3, wobei ein Wegendschalter am Antrieb oder an der Stellarmatur oder an einem diesen zugeordneten Bauteil angeordnet ist,
**dadurch gekennzeichnet, dass** der Wegendschalter so eingestellt ist, dass eine Abschaltung des Antriebs in Abhängigkeit der vom Antrieb auf die Stellarmatur einwirkenden Kraft erfolgt.

## Claims

1. Method for limit position disconnection of a drive mechanism of a regulating valve, wherein the drive mechanism is disconnected when a parameter variable by the drive mechanism has reached a limiting value, **characterised in that** the variable parameter is the force exerted on the regulating valve by the drive mechanism.

2. Method according to claim 1, **characterised in that** the limiting value of the force in the range of increasing force is chosen in such a way that the drive mechanism is disconnected before the maximum permissible torque of the drive mechanism is reached.

3. Method according to claim 2, **characterised in that** the drive mechanism is disconnected by a limit stop switch which is set in such a way that it disconnects when the force increases.

4. Device for limit position disconnection of a drive mechanism of a regulating valve, in particular for carrying out the method according to one of claims 1 to 3, wherein a limit stop switch is arranged on the drive mechanism or on the regulating valve or on a component assigned to them, **characterised in that** the limit stop switch is set in such a way that disconnection of the drive mechanism takes place as a function of the force exerted on the regulating valve by the drive mechanism.

## Revendications

1. Procédé d'arrêt en position d'extrémité d'un actionneur d'une vanne de réglage, l'actionneur étant arrêté lorsqu'une grandeur qu'il modifie a atteint une valeur limite, **caractérisé en ce que** la grandeur qui se modifie est la force appliquée par l'actionneur sur la vanne de réglage.

2. Procédé suivant la revendication 1, **caractérisé en ce que** l'on choisit la valeur limite de la force dans le domaine de la force croissante de façon à ce que l'actionneur soit arrêté avant que le couple de rotation maximum admissible de l'actionneur soit atteint.

3. Procédé suivant la revendication 2, **caractérisé en ce que** l'on arrête l'actionneur par un interrupteur de fin de course qui est réglé de façon à s'ouvrir lorsque la force augmente.

4. Dispositif d'arrêt en position d'extrémité d'un actionneur d'une vanne de réglage, notamment pour la mise en oeuvre du procédé selon l'une des revendications 1 à 3, dans lequel un interrupteur de fin de course est monté sur l'actionneur ou sur la vanne de réglage ou sur un élément qui leur est associé,
**caractérisé en ce que** l'actionneur de fin de course est réglé de manière à ce qu'il s'effectue un arrêt de l'actionneur en fonction de la force appliquée par l'actionneur à la vanne de réglage.
